# EUROPÄISCHE PATENTSCHRIFT

(11) **EP 0 976 508 B1**
(45) Veröffentlichungstag und Bekanntmachung des Hinweises auf die Patenterteilung: **03.11.2004**
(21) Anmeldenummer: 99112620.2
(22) Anmeldetag: 02.07.1999
(51) Int. Cl.: B26D 7/01, B26D 7/20, B26D 3/08, B26F 1/38

(54) **Werkstückauflagefläche für eine Schneidvorrichtung**
Workpiece supporting surface for a cutting device
Surface de support de pièces pour un dispositif de coupe

(30) Priorität: 30.07.1998 DE 29813528 U
(43) Veröffentlichungstag der Anmeldung: 02.02.2000
(73) Patentinhaber: Gaubatz, Heinz, 63128 Dietzenbach (DE)
(72) Erfinder: Gaubatz, Heinz, 63128 Dietzenbach (DE)
(74) Vertreter: KEIL & SCHAAFHAUSEN

(56) Entgegenhaltungen:
- EP-A- 0 761 110
- DE-A- 3 620 853
- DE-A- 19 604 616
- GB-A- 1 286 312
- GB-A- 2 057 956
- US-A- 3 777 604

## Beschreibung

Die Erfindung betrifft eine Schneidvorrichtung nach dem Oberbegriff des Anspruchs 1.

Kunststoffhäute oder Folien werden heutzutage in vielfältigen Formen eingesetzt. So sind auch die Armaturentafeln von Kraftfahrzeugen mit Kunststoffhäuten abgedeckt. In diese Armaturenbretter sind üblicherweise Airbags für Fahren und Beifahrer integriert. Während hierbei der Airbag für den Fahren im Lenkrad untergebracht ist, befindet sich der Airbag für den Beifahrer hinter dem Armaturenbrett und wird durch einen Airbagdeckel mit einer separaten Kunststoffhaut überzogen und über einen sichtbaren Schlitz von dem übrigen Armaturenbrett abgesetzt, um im Falle des Auslösens des Airbags einfach zu öffnen und um ggf. einen Austausch des Airbags zu ermöglichen. Da im Falle eines Crashs, bei welchem der Airbag auslöst, aber ohnehin das gesamte Armaturenbrett ausgetauscht werden muß, wird aus Designgründen angestrebt, das Armaturenbrett mit einer durchgängigen Kunststoffhaut zu überziehen, durch die auch der Air bag abgedeckt wird. Um hierbei zu gewährleisten, daß der Airbag im Falle eines Crashs zuverlässig öffnen kann, muß in der Abdeckhaut eine Sollbruchstelle ausgebildet werden, die es dem Airbagkissen ermöglicht, die Kunststoffhaut an einer definierten Stelle zu durchbrechen.

Es wurde bereits versucht, diese Sollbruchstelle mit Hilfe eines Lasers durch Anbringen eines Schnittes auf der Rückseite der Kunststoffhaut herzustellen. Beim Laserschneiden der Kunststoffhaut entstehen jedoch unerwünschte Dämpfe, die abgesaugt werden müssen. Zum Schneiden wird die Kunststoffhaut durch ein Lochblech angesaugt. Hierbei besteht jedoch die Gefahr, daß die Kunststoffhaut ungleichmäßig an dem Lochblech anliegt, so daß die Tiefe des Laserschnitts variiert. Ist der Schnitt in die nur 1 bis 1,5 mm dicke Kunststoffhaut aber zu tief, so zeichnet sich die Sollbruchstelle mit der Zeit an der Außenseite des Armaturenbrettes ab und die gewünschte Designwirkung wird zunichte gemacht. Außerdem muß bei einem derartigen Sicherheitsteil eine definierte Restwandstärke gewährleistet sein.

Aus der gattungsgemäßen DE 196 04 616 A1 sind ein Verfahren und eine Vor richtung zum Schneiden von Musterstücken für Konfektions-Kleidungsstücke bekannt, wobei eine Stoffbahn auf einer aus einem fluiddurchlässigen Material bestehenden Schicht auf einem Tisch gelagert wird. Unterhalb des Tisches ist eine Unterdruckquelle angeordnet, die durch die fluiddurchlässige Schicht einen Unterdruck auf die Arbeitsfläche ausübt, um die Stoffbahn während des Schneidens fest an der Oberfläche zu halten. Die fluiddurchlässige Schicht kann bspw. aus gesintertem Metall bestehen.

Aufgabe der Erfindung ist es daher, die beim Stand der Technik auftretenden Nachteile zu vermeiden und ein zuverlässigeres Schneiden der Kunststoffhaut zu ermöglichen.

Diese Aufgabe wird mit der Erfindung durch die Merkmale des Anspruchs 1 gelöst. Die Sintermetallplatte weist eine Vielzahl von kleinen Poren auf, die eine sehr große Ansaugfläche mit nur minimalen Oberflächenunebenheiten ermöglicht. Dadurch wird sichergestellt, daß die Kunststoffhaut absolut flach auf der Auflagefläche aufliegt. Die Sintermetallplatte ist mehrschichtig, insbesondere zweischichtig aufgebaut, wobei die obere, der Kunststoffhaut oder dergleichen zugewandte Schicht eine feinere Körnung hat als die untere Schicht. Die untere, grobkörnigere Schicht sorgt dafür, daß genügend Luft angesaugt werden kann, während die obere, feinkörnigere Schicht eine gleichmäßige Verteilung der Saugwirkung gewährleistet und die Unebenheiten an der Oberfläche der Sintermetallplatte auf ein Minimum reduziert.

Zweckmäßigerweise ist die Sintermetallplatte in einen Rahmen eingelassen, der einen Vakuumanschluß aufweist. Hierdurch wird eine gleichmäßige Ansaugung über die gesamte Fläche der Sintermetallplatte gewährleistet.

Erfindungsgemäß sind Vakuumüberwachungseinrichtungen (nachfolgend Vakuumwächter) zur Überprüfung der auf die Kunststoffhaut oder dergleichen ausgeübten Ansaugkraft vorgesehen. Ist kein ausreichend starkes Vakuum gegeben, so kann eine vollflächige Anlage der Kunststoffhaut an der Sintermetallfläche nicht garantiert und die Kunststoffhaut muß als Ausschuß deklariert werden.

Gemäß einer bevorzugten Ausgestaltung der Erfindung weist die Schneidvorrichtung einen über der Sinterplatte verfahrbaren Schneidkopf mit einem Schneidmesser auf. Durch das Schneidmesser wird ein rein mechanischer Schnitt unter Vermeidung der beim Laserschneiden auftretenden Dämpfe erzielt. Die Klinge des Schneidmessers wird hierbei austauschbar in einem Messerhalter gehalten, so daß bei zu starker Abnutzung oder Beschädigung der Klinge ein einfacher Austausch möglich ist.

In Weiterbildung dieses Erfindungsgedankens ist dem Schneidkopf eine Meßeinrichtung zugeordnet, mit welcher die Stärke der Kunststoffhaut gemessen wird. Hierdurch wird während des Schneidens eine Qualitätskontrolle ermöglicht.

Vorzugsweise ist die Meßeinrichtung mit einem Meßfuß gekoppelt, der federnd gelagert ist und währen des Schneidvorgangs auf der Kunststoffhaut oder der gleichen aufliegt. Der Meßfuß fährt mit dem Schneidmesser an der Kunststoffhaut entlang und kann damit Ungleichmäßigkeiten der Hautdicke feststellen. Sofern diese festgelegte Toleranzbereiche überschreiten, gilt die Kunststoffhaut als Ausschuß. Über den Meßfuß kann vor Beginn des Schneidvorgangs auch die korrekte Ausrichtung der Sintermetallplatte überprüft werden. Hierzu wird der Gleitfuß an mehreren Stellen gegen die Sintermetallplatte gedrückt, um eine eventuelle Schiefstellung der Sintermetallplatte zu erkennen. Eine solche Schiefstellung kann dann über die CNC-Steuerung der Schneidvorrichtung derart kompensiert werden, daß der Verfahrweg des Schneidmessers an die Schiefstellung der Sintermetallplatte angepaßt wird.

Der Meßfuß und das Schneidmesser sind erfindungsgemäß unabhängig voneinander verschieblich. Da eine gleichmäßige Restwandstärke der Kunststoffhaut erreicht werden soll, muß das Schneidmesser in konstantem Abstand, beispielsweise 0,5 mm, über der Sintermetallplatte verfahren werden. Der Meßfuß muß dagegen eventuelle Unebenheiten der Kunststoffhaut berücksichtigen, was durch seine federnde Lagerung möglich ist.

In Weiterbildung der Erfindung ist an der der Kunststoffhaut oder dergleichen zugewandten Seite des Meßfußes ein Gleitfuß vorzugsweise über einen Wechselkopf lösbar befestigt. Dadurch wird ein einfacher Austausch des Gleitfußes bei Abnutzung oder Beschädigung ermöglicht.

Um die Reibungswiderstände während des Gleitens auf der Kunststoffhaut oder dergleichen zu minimieren, weist der Gleitfuß eine ggf. glasfaserverstärkte Beschichtung aus Teflon oder dergleichen auf.

Die erfindungsgemäße Schneidvorrichtung weist außerdem eine Speichereinrichtung auf, in welcher die während des Schneidvorgangs gemessenen Daten der Hautstärke und/oder entsprechende Sollwerte gespeichert werden. Die Speicherwerte können in regelmäßigen Abständen, beispielsweise ein Mal pro Woche auf einem Permanentspeicher, beispielsweise einer beschreibbaren CD abgelegt werden.

Da die Qualität des Schnittes in die Kunststoffhaut oder dergleichen und damit die sicherheitsrelevanten Eigenschaften der Sollbruchstelle wesentlich von der Qualität der Schneidklinge abhängen, weist die Schneidvorrichtung bei einer besonders bevorzugten Ausführungsform der Erfindung außerdem eine vorzugsweise hochauflösende Kamera auf, mit welcher die Schneidklinge hinsichtlich Abnutzungsgrad, Ausrichtung, Ausbrüchen oder dergleichen überprüfbar ist. In regelmäßigen Abständen, beispielsweise vor und/oder nach jedem Schnitt wird die Klinge des Schneidmessers über die Kamera überprüft und mit vorgegebenen Sollwerten verglichen. Eine festgestellte Abnutzung kann, sofern sie einen festgelegten Toleranzbereich nicht überschreitet, bei der Steuerung des Verfahrensweges der Schneidklinge durch eine entsprechende Z-Achsen-Korrektur berücksichtigt werden.

In Weiterbildung dieses Erfindungsgedankens ist dem mit der Kamera erfaßten Bildausschnitt, in welchen die Schneidmesserklinge eingeführt wird, eine Referenzklinge zugeordnet. Sind die Abweichung der Klingenabmessungen gegenüber der Referenzklinge größer als ein festgelegtes Toleranzmaß, so muß die Klinge ausgetauscht und die zuletzt geschnittene Kunststoffhaut oder dergleichen als Ausschuß deklariert werden.

Die erfindungsgemäße Schneidvorrichtung weist außerdem einen Barcodedrucker zum Aufbringen eines Barcodelabels auf die Kunststoffhaut oder dergleichen nach dem Schneiden auf. Hierdurch kann bei der Weiterverarbeitung der Kunststoffhaut überprüft werden, ob und ggf. welcher Schneidvorgang durchgeführt wurde.

Die Schneidvorrichtung weist außerdem einen Entwertungslocher auf, mit welchem Kunststoffhäute oder dergleichen, bei deren Verarbeitung ein Fehler (nicht ausreichendes Vakuum, übergroße Hautdickenabweichungen, Beschädigung der Schneidmesserklinge) aufgetreten ist, entwertet werden. An Folgemaschinen wird dann überprüft, ob ein solches Entwertungsloch vorliegt und die Kunststoffhaut oder dergleichen ggf. nicht mehr weiterverarbeitet.

Um die Verarbeitungsgeschwindigkeit der Schneidvorrichtung zu erhöhen, ist erfindungsgemäß eine Mehrzahl von, insbesondere vier nebeneinander angeordneten Schneidbereichen mit Sintermetallplatten vorgesehen, die von dem Schneidkopf angefahren werden können.

Weiterbildungen, Vorteile und Anwendungsmöglichkeiten der Erfindung ergeben sich auch aus der nachfolgenden Beschreibung eines Ausführungsbeispiels und der Zeichnung.

Es zeigen:
- Fig. 1: eine schematische Draufsicht auf eine erfindungsgemäße Schneidvorrichtung,
- Fig. 2: eine schematische Vorderansicht der Schneidvorrichtung gemäß Fig. 1,
- Fig. 3: eine schematische Seitenansicht der Schneidvorrichtung gemäß Fig. 1,
- Fig. 4a: einen Schnitt durch einen Meß- und Schneidkopf,
- Fig. 4b: einen Teilschnitt entlang der Linie A-A in Fig. 4a,
- Fig. 5: schematisch den Aufbau für die Klingenvermessung,
- Fig. 6a bis 6c: schematisch die bei der Klingenvermessung berücksichtigten Kriterien.

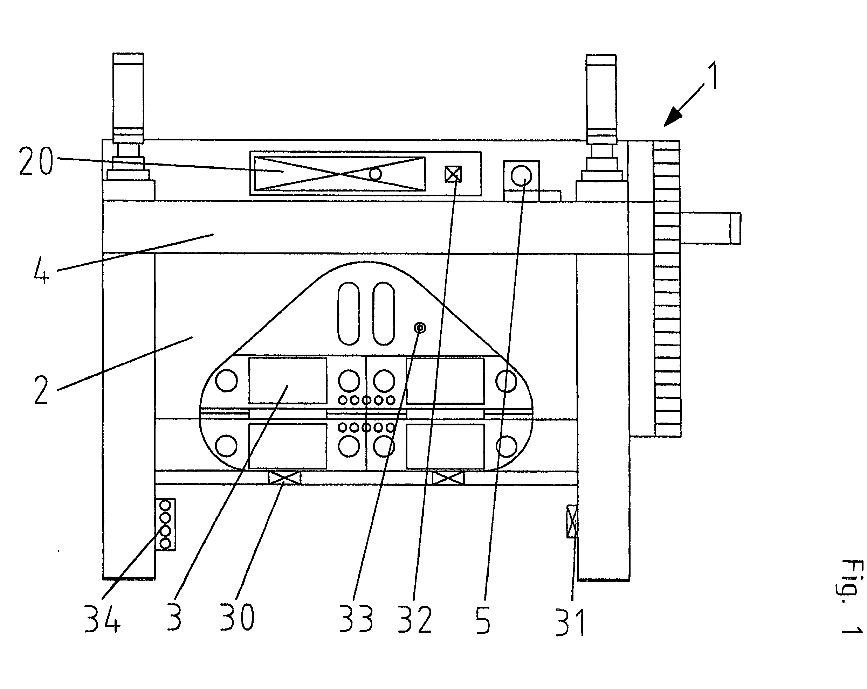

In den Fig. 1 bis 3 ist die erfindungsgemäße Schneidvorrichtung schematisch dargestellt. Auf einem Maschinentisch 2 sind vier Sintermetallplatten 3 als Auflagefläche für hier nicht dargestellte Kunststoffhäute, Folien oder dergleichen angeordnet.

Die Sintermetallplatten 3 sind bei einem bevorzugten Ausführungsbeispiel etwa 10 mm dick und in einem Stahlrahmen eingelassen. Der Rahmen hat eine Wandstärke von etwa 3 mm und einen zentralen Vakuumanschluß. Mit dem Rahmen kommt die Sintermetallplatte 3 auf eine Gesamtdicke von etwa 38 mm. Die Sintermetallplatte 3 ist zweischichtig aufgebaut, wobei die untere Schicht eine Körnung von etwa 0,8 mm aufweist und ca. 6 mm dick ist. Dies sorgt dafür, daß genug Luft angesaugt werden kann. Die obere Schicht der Sintermetallplatte 3 weist dagegen eine feinere Körnung von nur etwa 0,3 mm auf und ist ca. 4 mm dick. Die obere Schicht dient der gleichmäßigen Verteilung der Saugwirkung und reduziert die Unebenheiten auf der Oberfläche der Sintermetallplatte 3 auf ein Minimum.

Die Schneidvorrichtung 1 weist an dem Maschinentisch 2 außerdem einen Knieschalter 30 und ein Bedienteil 31, über die die Maschine bedient werden können. Die Einrichtung der Maschine erfolgt mit Hilfe eines Einrichtklotzes 32. Außerdem weist die Schneidvorrichtung 1 einen Entwertungslocher 33 auf, mit dem unbrauchbare Kunststoffhäute oder dergleichen als Ausschuß gekennzeichnet werden können. Schließlich kann ein hier nicht dargestellter Barcodedrucker vorgesehen sein, mit welchem Informationen über den durchgeführten Arbeitsgang auf der Kunststoffhaut oder dergleichen angebracht werden können.

Außerdem ist eine Messerhalterung 34 vorgesehen, in der Austauschmesser oder -klingen aufgenommen sind.

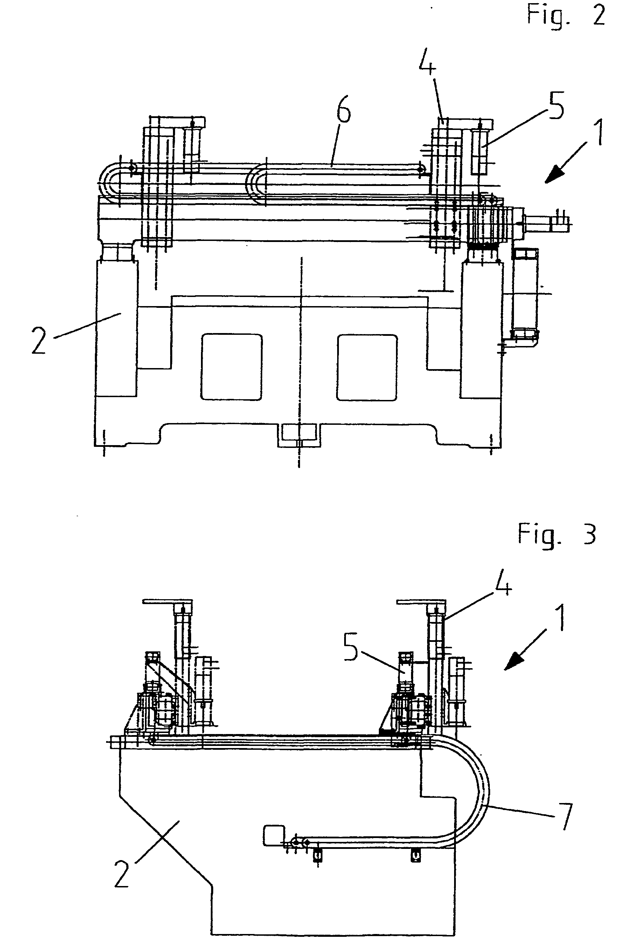

Auf dem Maschinentisch 2 ist an einem Führungsschlitten 4 ein Meß- und Schneidkopf 5 angeordnet, der auf dem Maschinentisch 2 beliebig verfahrbar ist. In den Fig. 2 und 3 ist jeweils in der rechten Bildhälfte mit durchgezogenen Linien eine Ausgangsstellung des Meß- und Schneidkopfes 5 und in der linken Bildhälfte in gestrichelten Linien eine Verfahrposition des Meß- und Schneidkopfes 5 angedeutet. Der Führungsschlitten 4 mit dem Meß- und Schneidkopf 5 wird über Energieketten 6, 7 verfahren.

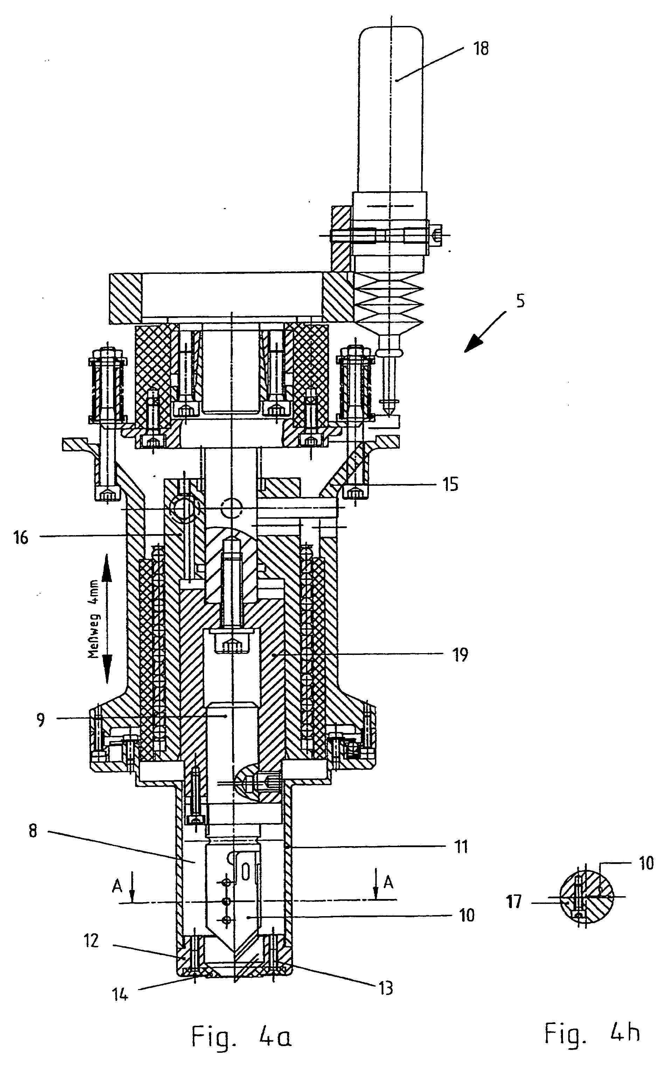

Der in Fig. 4 näher dargestellte Meß- und Schneidkopf 5 weist im wesentlichen zwei unabhängig voneinander bewegliche Elemente, nämlich ein Schneidmesser 8 bestehend aus einem Messerhalter 9 und einer Klinge 10, und einen Meßfuß 11 auf, an dessen unterem Ende über einen Wechselkopf 12 und Befestigungsschrauben 13 ein Gleitfuß 14 angebracht ist. Der Gleitfuß 14 weist eine ggf. glasfaserverstärkte Beschichtung aus Teflon oder dergleichen auf, um die Reibungskräfte beim Gleiten zu verringern. Der Meßfuß 11 ist an einem Gehäuse 15 befestigt, welches gegenüber einer Zylinderführung 16 des Meßund Schneidkopfes 5 federnd verschieblich gelagert ist. Eine eventuelle Verschiebung des Meßfußes 11 gegenüber einer festgelegten Nullstellung wird über einen Meßtaster 18 erfaßt.

Innerhalb der Zylinderführung 16 des Meß- und Schneidkopfes 5 ist ein Werkzeughalter 19 verschieblich geführt, in dem der Messerhalter 9 befestigt ist. In dem Messerhalter 9 ist die Klinge 10 des Schneidmessers 8, beispielsweise durch Festspannen zwischen zwei Spannplatten 17 (vgl. Fig. 4b) befestigt.

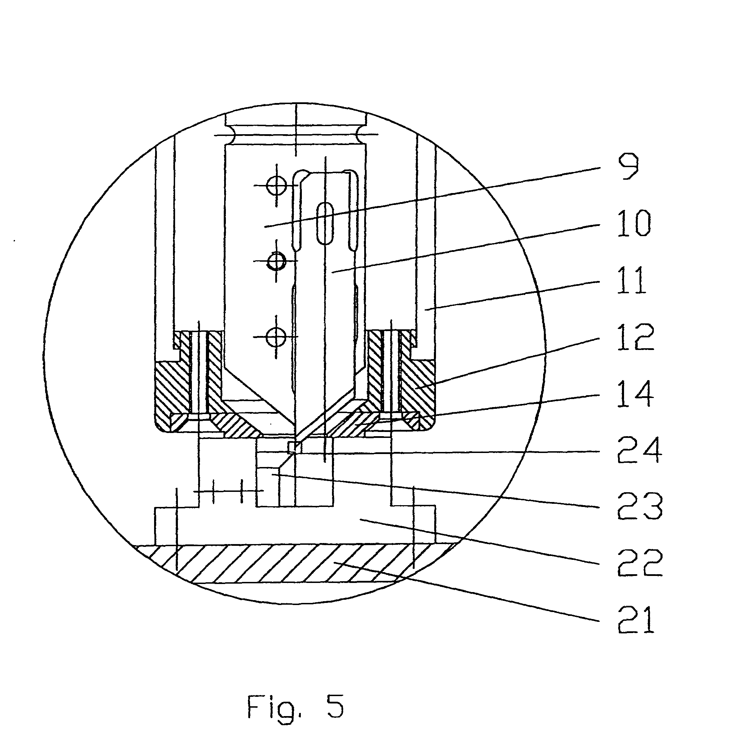

Zur Überprüfung der Klinge 10 des Schneidmessers 8 ist eine vorzugsweise hochauflösende Meßkamera 20 vorgesehen, die die Klinge 10 an einem Kameratisch 21 (Fig. 5) mit Hilfe einer an einem Halter 22 angebrachten Referenzklinge 23 überprüft. Die Referenzklinge 23 ist in einem Bildausschnitt 24 der Kamera 20, in den auch die Klinge 10 eingeführt wird, angeordnet.

Nachfolgend wird die Funktion der erfindungsgemäßen Schneidvorrichtung erläutert.

Zunächst wird die Nullposition der Sinterplatte 3 mit Hilfe des Meß- und Schneidkopfes 5 festgelegt. Hierzu wird die Sinterplatte 3 an mehreren Positionen mit dem Meßfuß 11 angefahren. Die Nullposition der Sinterplatte 3 wird gespeichert. Außerdem wird eine eventuelle, auch minimale Schiefstellung der Sinterplatte 3 festgestellt und der Steuerung der Schneidvorrichtung 1 zugeführt, um ggf. eine rechnerische Korrektur der Schneidbewegung zu bestimmen.

Zum Schneiden einer Sollbruchstelle in eine hier nicht dargestellte Kunststoffhaut oder dergleichen, insbesondere zur Abdeckung von Armaturenbrettern in Kraftfahrzeugen, wird die Kunststoffhaut mit ihrer Außenseite auf die durch die Sintermetallplatte 3 gebildete Auflagefläche der Schneidvorrichtung 1 aufgelegt. Durch Aktivieren der Vakuumeinrichtung wird die Kunststoffhaut oder dergleichen gleichmäßig auf die Sintermetallplatte 3 gesaugt, so daß sie vollflächig aufliegt. Die notwendige Stärke des Vakuums wird über Vakuumwächter verifiziert. Nun wird mittels des Meßfußes 11 die Dicke der Kunststoffhaut überprüft. Die Hautdicke muß innerhalb eines festgelegten Toleranzbereiches, beispielsweise 0,9 und 1,4 mm, liegen, ansonsten wird die Haut verworfen. Zur Überprüfung der Hautdicke kann der Meßfuß 11 beispielsweise an einer Vielzahl von, bspw. etwa 60, Punkten auf die Kunststoffhaut aufgedrückt werden, wobei die Hautdicke gegenüber der zuvor festgelegten Nullposition der Sintermetallplatte 3 ermittelt wird. Liegt die Hautdicke im vorgeschriebenen Toleranzbereich, so kann die Sollbruchstelle mit Hilfe des Schneidmessers 8 eingeschnitten werden. Hierzu wird der Schneidkopf 5 mit dem Schneidmesser 8 entlang der vorgegebenen Kontur der Sollbruchstelle geführt, wobei die Vertikalposition der Spitze der Klinge 10 über die CNC-Steuerung der Schneidvorrichtung 1 derart gesteuert wird, daß eine Restwandstärke der Kunststoffhaut von beispielsweise 0,5 mm verbleibt. Die Klinge 10 wird also parallel zur Sinterplatte 3 verfahren. Hierbei wird über die CNC-Steuerung eine eventuelle zuvor ermittelte Schrägstellung der Sintermetallplatte 3 berücksichtigt.

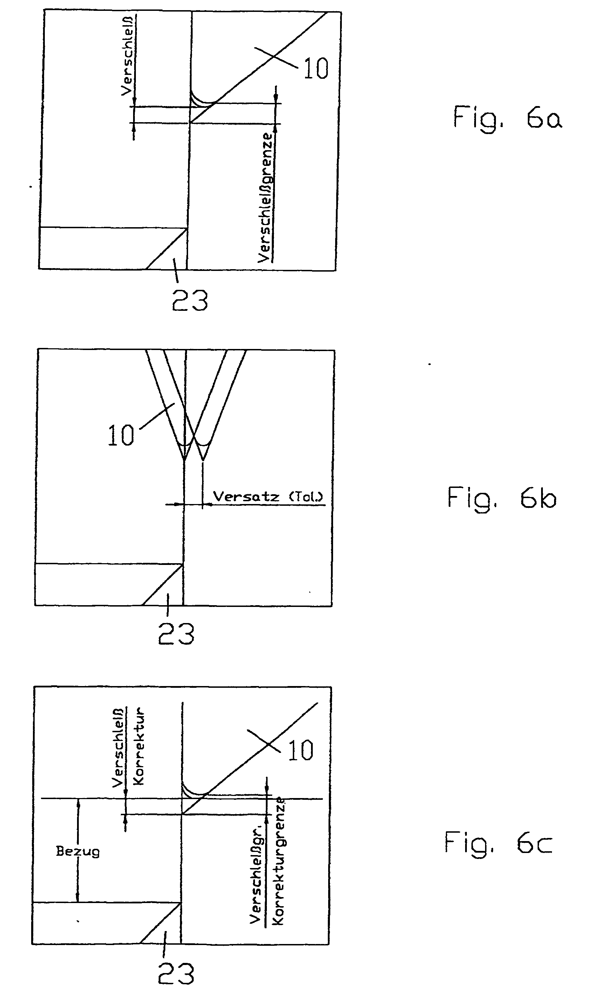

Vor dem Schneidvorgang wird jedoch die Schneidengeometrie der Messerklinge 10 mit Hilfe der hochauflösenden Meßkamera 20 und der Referenzklinge 23 überprüft. Wie in den Fig. 6a bis 6c veranschaulicht ist, untersucht die Kamera 20 zunächst die Abweichung der Ist-Spitze zur Soll-Spitze der Schneide. Diese Auswertung geschieht innerhalb der Kamera 20 mittels eines Prüfplanes. Innerhalb dieses Prüfplanes wird die maximale Verschleißgrenze festgelegt. Der hier ermittelte Verschleiß wird in der Kamera 20 hinterlegt, sofern er nicht die Verschleißgrenze überschreitet. Nach dieser Messung erhält die Steuerung von der Kamera 20 den Befehl, die Klinge 10 um 90° zu drehen. Nach der Drehung der Klinge 10 erfolgt von der Steuerung der Befehl an die Kamera 20, den Versatz der Schneidklinge 10 zu ermitteln, dessen Obergrenze wiederum in der Kamera 20 toleriert ist. Anhand des Prüfplanes wird nun intern in der Kamera 20 ausgewertet, ob eine Toleranzüberschreitung der Abnutzung oder des Versatzes vorliegt. Ist dies der Fall, gibt die Kamera 20 eine Meldung über einen Ausgang an die Steuerung der Schneidvorrichtung 1, daß ein Fehler vorliegt. Diese Fehlermeldung wird in einem Display für die Bediener visualisiert. Die fehlerhafte Klinge 10 muß dann ausgetauscht bzw. richtig eingelegt werden. Wird die interne Auswertung der Kamera 20 als gut gewertet, übergibt die Kamera an die Steuerung den Korrekturwert der Schneidenabnutzung. Die CNC-Achse korrigiert nun die Abweichung der Schneide durch Nachstellen in Z-Richtung. Durch die Drehung der Achsen kann weiterhin mittels einer eingelegten Klinge der Rundlauf der C-Achse überprüft werden. Im Einrichtbetrieb der Kamera wird der Bezug der Klinge 10 zum Tisch 2 (Sintermetallplatte 3) einmalig durch ein Meßnormal (Nullklinge) und durch Messung der Klinge 10 zum Tischniveau festgelegt. Geht dieser Bezug zum Beispiel durch Gewalteinwirkung verloren, kann er problemlos durch das Meßnormal oder die Nullklinge wieder hergestellt werden.

Während des Schneidvorgangs gleitet der Gleitfuß 14 des Meßfußes 11 über die Kunststoffhaut, wobei er eventuelle Unebenheiten der Kunststoffhaut durch seine federnde Lagerung kompensieren kann. Die eine Vertikalverschiebung des Gleitfußes 14 bewirkenden Unebenheiten der Kunststoffhaut werden jedoch durch den Meßtaster 18 registriert, so daß eine Fehlermeldung erfolgen kann, wenn die Unebenheiten ein vorgegebenes Toleranzmaß überschreiten.

Nach Durchführung des Schneidvorgangs kann die Schneidklinge 10 über die Kamera 20 erneut überprüft werden.

Ist während des Schneidvorgangs alles normal verlaufen, wird in einem Barcodedrucker ein Label gedruckt und auf der Kunststoffhaut aufgebracht, auf dem die Verarbeitungszeit, die Art der angebrachten Sollbruchstelle (zum Beispiel Fahrzeugtyp, Rechtslenker oder Linkslenker) oder dergleichen ablesbar ist. Ist dagegen während des Schneidvorgangs ein Fehler aufgetreten, so wird mittels des Entwertungslochers 33 die Kunststoffhaut entwertet, so daß eine Weiterverarbeitung und ggf. ein Einbau in das Kraftfahrzeug verhindert werden kann.

Alle Daten der Kunststoffhaut und der vor und während des Schneidvorgangs vorgenommenen Messungen werden in einer Speichereinheit der Schneidvorrichtung 1 gespeichert. In festgelegten Abständen, beispielsweise ein Mal pro Woche werden die Speicherdaten in einem Permanentspeicher, beispielsweise einer CD, gespeichert und ausgelagert.

### Bezugszeichenliste:

- 1: Schneidvorrichtung
- 2: Maschinentisch
- 3: Sintermetallplatte
- 4: Führungsschlitten
- 5: Meß- und Schneidkopf
- 6: Energiekette
- 7: Energiekette
- 8: Schneidmesser
- 9: Messerhalter
- 10: Klinge
- 11: Meßfuß
- 12: Wechselkopf
- 13: Befestigungsschraube
- 14: Gleitfuß
- 15: Gehäuse
- 16: Zylinderführung
- 17: Spannplatte
- 18: Meßtaster
- 19: Werkzeughalter
- 20: Meßkamera
- 21: Kameratisch
- 22: Halter
- 23: Referenzklinge
- 24: Bildausschnitt
- 30: Knieschalter
- 31: Bedienteil
- 32: Einrichtklotz
- 33: Entwertungslocher
- 34: Messerhalterung

## Patentansprüche

1. Schneidvorrichtung, insbesondere zum Schneiden von Sollbruchstellen in Kunststoffhäute, Folien oder dergleichen, mit einer luftdurchlässigen Auflagefläche für die Kunststoffhaut oder dergleichen und mit einer Ansaugvorrichtung, mit welcher die Kunststoffhaut oder dergleichen durch die Auflagefläche angesaugt wird, wobei die Auflagefläche durch eine Sintermetallplatte (3) gebildet wird, **dadurch gekennzeichnet, daß** die Sintermetallplatte (3) mehrschichtig, insbesondere zweischichtig aufgebaut ist, wobei die obere, der Kunststoffhaut oder dergleichen zugewandte Schicht eine feinere Körnung hat als die untere Schicht.

2. Schneidvorrichtung nach Anspruch 1, **dadurch gekennzeichnet, daß** die Sintermetallplatte (3) in einen Rahmen eingelassen ist, der einen Vakuumanschluß aufweist.

3. Schneidvorrichtung nach einem der Ansprüche 1 oder 2, **gekennzeichnet durch** Vakuumüberwachungseinrichtungen zur Überprüfung der auf die Kunststöffhaut oder dergleichen ausgeübten Ansaugkraft.

4. Schneidvorrichtung nach einem der Ansprüche 1 bis 3, **gekennzeichnet durch** einen Schneidkopf (5), der über der Sintermetallplatte (3) verfahrbar ist und ein Schneidmesser (8) aufweist.

5. Schneidvorrichtung nach Anspruch 4, **dadurch gekennzeichnet, daß** eine Klinge (10) des Schneidmessers (8) austauschbar in einem Messerhalter (9) gehalten wird.

6. Schneidvorrichtung nach Anspruch 4 oder 5, **dadurch gekennzeichnet, daß** dem Schneidkopf (5) eine Meßeinrichtung (18) zugeordnet ist, mit welcher die Dicke der Kunststoffhaut oder dergleichen gemessen wird.

7. Schneidvorrichtung nach Anspruch 6, **dadurch gekennzeichnet, daß** die Meßeinrichtung (18) mit einem Meßfuß (11) gekoppelt ist, welcher federnd gelasgert ist und während des Schneidvorgangs auf der Kunststoffhaut oder dergteächen aufliegt.

8. Schneidvorrichtung nach Anspruch 7, **dadurch gekennzeichnet, daß** der Meßfuß (11) und das Schneidmesser (8) unabhängig voneinander verschieblich sind.

9. Schneidvorrichtung nach Anspruch 7 oder 8, **dadurch gekennzeichnet, daß** an der der Kunststoffhaut oder dergleichen zugewandten Seite des Meßfußes (11) ein Gleitfuß (14) lösbar befestigt ist.

10. Schneidvorrichtung nach Anspruch 9, **dadurch gekennzeichnet, daß** der Gleitfuß (14) über einen Wechselkopf (12) an dem Meßfuß (11) befestigt ist.

11. Schneidvorrichtung nach Anspruch 9 oder 10, **dadurch gekennzeichnet, daß** der Gleitfuß (14) eine ggf. glasfaserverstärkte Beschichtung aus Teflon oder dergleichen aufweist.

12. Schneidvorrichtung nach einem der Ansprüche 1 bis 11, **gekennzeichnet durch** eine Speichereinrichtung, in welcher die gemessenen Daten der Dicke der Kunststoffhaut oder dergleichen und/oder entsprechende Sollwerte gespeichert werden.

13. Schneidvorrichtung nach einem der Ansprüche 1 bis 12, **gekennzeichnet durch** eine vorzugsweise hochauflösende Kamera (20), mit welcher die Klinge (10) des Schneidmessers (8) hinsichtlich Abnutzungsgrad, Ausrichtung, Ausbrüchen oder dergleichen überprüfbar ist.

14. Schneidvorrichtung nach Anspruch 12 oder 13, **dadurch gekennzeichnet, daß** dem mit der Kamera (20) erfaßten Bildausschnitt (24), in welchen die Schneidmesserklinge (10) eingeführt wird, eine Referenzklinge (23) zugeordnet ist.

15. Schneidvorrichtung nach einem der Ansprüche 1 bis 14, **gekennzeichnet durch** einen Barcodedrucker zum Aufbringen eines Barcodelabels auf die Kunststoffhaut oder dergleichen.

16. Schneidvorrichtung nach einem der Ansprüche 1 bis 15, **gekennzeichnet durch** einen Entwertungslocher (33).

17. Schneidvorrichtung nach einem der Ansprüche 1 bis 16, **gekennzeichnet durch** eine Mehrzahl von, insbesondere vier nebeneinander angeordneten Schneidbereichen mit Sintermetallplatten (3), die von dem Schneidkopf (5) angefahren werden können.

## Claims

1. A cutting device, in particular for cutting predetermined breaking points in plastic skins, foils or the like, comprising an air-permeable supporting surface for the plastic skin or the like, and an aspiration device for suctioning the plastic skin or the like through the supporting surface, wherein the supporting surface is formed by a sintered metal plate (3), **characterized in that** the sintered metal plate (3) is constructed of several layers, in particular two layers, wherein the upper layer facing the plastic skin or the like has a grain size which is smaller than the grain size of the lower layer.

2. The cutting device according to claim 1, **characterized in that** the sintered metal plate (3) is embedded in a frame having a vacuum connection.

3. The cutting device according to any of claims 1 or 2, **characterized by** a vacuum monitor for checking the suction force which is applied to the plastic skin or the like.

4. The cutting device according to any of claims 1 to 3, **characterized by** a cutting head (5) which is moveable over said sintered metal plate (3) and which has a cutting knife (8).

5. The cutting device according to claim 4, **characterized in that** a blade (10) of said cutting knife (8) is replaceably held in a knife holder (9).

6. The cutting device according to claim 4 or 5, **characterized in that** the cutting head (5) is coordinated with a measuring device (18) for measuring the thickness of the plastic skin or the like.

7. The cutting device according to claim 6, **characterized in that** the measuring device (18) is coupled to a measuring foot (11) which is spring loaded and applied onto the plastic skin or the like during the cutting process.

8. The cutting device according to claim 7, **characterized in that** the measuring foot (11) and the cutting knife (8) are movable independently of each other.

9. The cutting device according to claim 7 or 8, **characterized in that** a sliding foot (14) is detachably mounted on a side of the measuring foot (11) which faces the plastic skin or the like.

10. The cutting device according to claim 9, **characterized in that** the sliding foot (14) is attached to said measuring foot (11) by means of an exchange head (12).

11. The cutting device according to claim 9 or 10, **characterized in that** said sliding foot (14) comprises a coating made of Teflon or the like which maybe reinforced with glass fibers.

12. The cutting device according to any of claims 1 to 11, **characterized by** a memory device for storing the measured data of the thickness of the plastic skin or the like and/or corresponding set values.

13. The cutting device according to any of claims 1 to 12, **characterized by** a preferably high-resolution camera (20) for checking the blade (10) of the cutting knife (8) with respect to degree of blade wear, blade alignment, breakage or the like.

14. The cutting device according to claim 12 or 13, **characterized in that** a reference blade (23) is assigned to an image section (24) into which the cutting knife blade (10) is introduced and which is detected with the camera (20).

15. The cutting device according to any of claims 1 to 14, **characterized by** a bar code printer for introducing a bar code label onto the plastic skin or the like.

16. The cutting device according to any of claims 1 to 15, **characterized by** an obliterating punch (33).

17. The cutting device according to any of claims 1 to 16, **characterized by** a plurality of, in particular four adjacent cutting regions with sintered metal plates (3) which can be addressed by the cutting head (5).

## Revendications

1. Dispositif de coupe, notamment pour couper des sections de rupture intentionnellement prévue dans des peaux en cuir synthétique, des pellicules ou des produits semblables, avec une surface d'appui perméable à l'air pour la peau en cuir synthétique ou le produit similaire et avec un dispositif d'aspiration à l'aide duquel la peau en cuir synthétique ou le produit similaire est aspirée à travers la surface d'appui, la surface d'appui étant formée par une plaque en métal fritté (3), **caractérisé en ce que la** plaque en métal fritté (3) est constituée de plusieurs couches, notamment de deux couches, la couche supérieure dirigée vers la peau en cuir synthétique ou le produit similaire présentant une plus faible granulométrie que la couche inférieure.

2. Dispositif de coupe selon la revendication 1, **caractérisé en ce que** la plaque en métal fritté (3) est encastrée dans un cadre qui est muni d'un branchement de vide.

3. Dispositif de coupe selon l'une des revendications 1 ou 2, **caractérisé par** des dispositifs de contrôle du vide pour contrôler la force d'aspiration exercée sur la peau en cuir synthétique ou le produit similaire.

4. Dispositif de coupe selon l'une des revendications 1 à 3, **caractérisé par** une tête de coupe (5) qui peut être déplacée sur la plaque en métal fritté (3) et qui est munie d'un couteau de coupe (8).

5. Dispositif de coupe selon la revendication 4, **caractérisé en ce qu'**une lame (10) du couteau de coupe (8) est maintenue dans un support à couteaux (9) en pouvant être échangée.

6. Dispositif de coupe selon la revendication 4 ou 5, **caractérisé en ce qu'**un dispositif de mesure (18) est attribué la tête de coupe (5) à l'aide duquel l'épaisseur de la peau en cuir synthétique ou le produit semblable est mesurée.

7. Dispositif de coupe selon la revendication 6, **caractérisé en ce que** le dispositif de mesure (18) est couplé à un pied de mesure (11) qui est monté élastiquement et repose durant la procédure de coupe sur la peau en cuir synthétique ou le produit semblable.

8. Dispositif de coupe selon la revendication 7, **caractérisé en ce que** le pied de coupe (11) et le couteau de coupe (8) peuvent être déplacés indépendamment l'un de l'autre.

9. Dispositif de coupe selon la revendication 7 ou 8, **caractérisé en ce qu'**un patin (14) est fixé de façon amovible sur la face du pied de mesure (11) dirigée vers la peau en cuir synthétique ou le produit semblable.

10. Dispositif de coupe selon la revendication 9, **caractérisé en ce que** le patin (14) est fixé au pied de mesure (11) à l'aide d'une tête échangeable (12).

11. Dispositif de coupe selon la revendication 9 ou 10, **caractérisé en ce que** le patin (14) est muni d'un revêtement en téflon ou un produit similaire, éventuellement renforcé par fibres de verre.

12. Dispositif de coupe selon l'une des revendication 1 à 11, **caractérisé par** un dispositif de mémorisation dans lequel sont mémorisées les données de mesure de l'épaisseur de la peau en cuir synthétique ou du produit semblable et / ou les valeurs de consigne.

13. Dispositif de coupe selon l'une des revendications 1 à 12, **caractérisé par** une caméra de préférence à haute résolution à l'aide de laquelle la lame (10) du couteau de coupe (8) peut être contrôlée quant à son degré d'usure, son alignement, ses irrégularités ou d'autres faits similaires.

14. Dispositif de coupe selon la revendication 12 ou 13, **caractérisé en ce qu'**une lame de référence (23) est attribuée au segment d'image (24) obtenue par la caméra (20) et dans lequel la lame est introduite.

15. Dispositif de coupe selon l'une des revendications 1 à 14, **caractérisé par** une imprimante de codes barres pour appliquer une étiquette code barres sur la peau en cuir synthétique ou le produit similaire.

16. Dispositif de coupe selon l'une des revendications 1 à 16, **caractérisé par** une perforeuse pour marquer les rebus (33).

17. Dispositif de coupe selon t'une des revendications 1 à 16, **caractérisé par** une pluralité de domaines de coupe, notamment quatre domaines de coupe disposés les uns à côté des autres, avec des plaques en métal fritté (3) sur lesquelles peut passer la tête de coupe (5).
